# EUROPÄISCHE PATENTSCHRIFT

(11) **EP 0 567 751 B1**
(45) Veröffentlichungstag und Bekanntmachung des Hinweises auf die Patenterteilung: **28.12.1994**
(21) Anmeldenummer: 93104117.2
(22) Anmeldetag: 13.03.1993
(51) Int. Cl.: B01D 61/08, C02F 1/44

(54) **Trinkwasseraufbereitungsgerät**
Drinking water treatment apparatus
Appareil de traitement d'eau potable

(30) Priorität: 25.04.1992 DE 4213714
(43) Veröffentlichungstag der Anmeldung: 03.11.1993
(73) Patentinhaber: WAPURA TRINKWASSERREINIGUNGS GmbH, D-48465 Schüttorf (DE)
(72) Erfinder: Wolbers, Ralf, W-4443 Schüttorf (DE)
(74) Vertreter: Habbel, Hans-Georg, Dipl.-Ing.

(56) Entgegenhaltungen:
- EP-A- 0 438 372
- DE-A- 3 734 600
- DE-A- 3 914 940
- FR-A- 2 406 609
- US-A- 3 887 463
- US-A- 4 705 625

## Beschreibung

Die Erfindung bezieht sich auf ein Trinkwasseraufbereitungsgerät gemäß dem Oberbegriff des Hauptanspruches.

Ein gattungsbildendes Trinkwasseraufbereitungsgerät ist in der DE-C-37 34 600 beschrieben. Die unter einem Druck, z. B. dem üblichen Leitungswasserdruck von 6 bar, stehende Umkehrosmosemembrane füllt einen Druckspeicher, in welchem dann das gereinigte Wasser zum Verbrauch bereitsteht. Hierbei ist es vom Prinzip her so, daß die Produktionsmenge und die Permeatqualität stark vom wirksamen Differenzdruck, der auf der einen und anderen Seite der Membrane wirkt, abhängen. Je kleiner der Differenzdruck ist, desto schlechter wird die Qualität und je geringer ist die Produktionsmenge.

Über die Füllung des Druckspeichers wirkt ein steigender Druck auf die Umkehrosmosemembrane, im nachfolgenden kurz "RO-Modul" genannt, und es ist daher bereits bekannt, ein hydraulisches Abschaltventil in die Rohwasserzuleitung und die Leitung zwischen RO-Modul und Druckspeicher einzuschalten, welches derart arbeitet, daß die Anlage abgeschaltet wird, wenn nur noch ca. 1,2 bis 2 bar Differenzdruck über das RO-Modul wirken.

Versuche haben gezeigt, daß bei den zum Stand der Technik gehörenden Systemen über 90 Liter Abwasser erzeugt werden, um einen Druckspeicher mit 10 Liter gereinigtem Wasser zu füllen. Dieser Vorgang benötigt fast fünf Stunden. Eine Entnahmemenge von 2 Litern wird erst nach drei Stunden wieder ausgeglichen. Dabei fallen dann 57 Liter Abwasser an, was eine Ausbeute von nur noch 3,4 % entspricht.

Aus den im Recherchenbericht genannten Literaturstellen (DE-A-39 14 940, FR-A-24 06 609, EP-A-04 38 372, US-A-47 05 625) sind sogenannte "Wasser auf Wasser"-Trinkwasseraufbereitungsgeräte bekanntgeworden, die mit je einem Reverse-Osmose-Modul arbeiten. Bei diesen Geräten wird das Reinwasser im Reinwasserspeicher in einer Blase gespeichert, auf deren Außenseite der normale Wasserdruck zur Einwirkung gebracht werden kann, wodurch das Reinwasser aus dem Reinwasserspeicher ausgetrieben wird. Bei all diesen Geräten besteht der schwerwiegende Nachteil, daß es nicht möglich ist, mit einem einzigen Reinwasserspeicher gleichzeitig Wasser zu entnehmen und gleichzeitig Reinwasser in dem Reverse-Osmose-Modul zu produzieren.

Aus diesem Grund sind diese zum Stand der Technik gehörenden und weit verbreiteten Geräte nicht in Verbindung mit Arbeitsgeräten einsetzbar, an denen ständig ein gewisser Druck in der Wasserzuleitung anstehen muß. Zu solchen Geräten gehören gewerbliche Kaffeemaschinen, Gläserspülmaschinen usw.

Um diese bekannten Trinkwasseraufbereitungsgeräte überhaupt wirksam zur Arbeit zu bringen, ist es erforderlich, daß die Zapfhähne dieser Einrichtungen oder das Leitungssystem dieser Einrichtungen mit komplizierten Druckvorrichtungen ausgerüstet sind, die gewährleisten, daß sofort bei Schließen des Entnahmehahns der Leitungsdruck abgebaut wird, so daß auf die eigentliche Membrane kein Gegendruck einwirkt.

Nachteilig bei den bekannten Geräten ist weiterhin, daß sie einen hohen Wasserverbrauch benötigen, um wirksam zu sein.

Der Erfindung liegt die Aufgabe zugrunde, ein kontinuierlich arbeitendes Trinkwasseraufbereitungsgerät zu schaffen, bei welchem auf der Permeatseite des RO-Moduls kein nennenswerter Gegendruck ansteht, aber trotzdem das System mit einem Druckspeicher an der Abgabeseite arbeitet, der ständig unter Druck steht.

Diese der Erfindung zugrundeliegende Aufgabe wird durch die Lehre des Patentanspruches gelöst.

Vorteilhafte Ausgestaltungen sind in den Unteransprüchen erläutert.

Mit anderen Worten ausgedrückt wird vorgeschlagen, daß das gereinigte Wasser, also das sogenannte Permeat, durch eine Pumpe in den Druckspeicher gefördert wird, ohne daß am Membranausgang ein nennenswerter Gegendruck entsteht. Diese Lösung wird in einfachster Weise dadurch erreicht, daß als Antriebsenergie für die Permeatpumpe der Leitungsdruck ausgenutzt wird, unter dem das Abwasser oder Konzentrat des RO-Moduls steht. Die Permeatpumpe wird dabei vorzugsweise durch eine Membranpumpe gebildet. Die Pumpenkammer nimmt das unter Druck aus dem RO-Modul ausfließende Permeat auf, wobei die Pumpenmembrane langsam in eine Richtung durchgebogen wird. Hat diese Durchbiegung der Membrane ihren weitesten und einstellbaren Weg erreicht, wirkt sie auf einen Anschlag, durch den ein in die Abflußleitung des Konzentrats hinter der Pumpe eingeschaltetes Druckhalteventil geschlossen wird. Ein zwischen dem RO-Modul und der Permeatpumpe eingeschaltetes Druckhalteventil ist entweder gewollt undicht, so daß sich über einen Staudruck ein Druck auf der Arbeitsseite der Permeatpumpe aufbaut oder das hier eingeschaltete Druckhalteventil wird geöffnet, so daß dann hierdurch der Druck in die Arbeitsseite der Pumpe eingeleitet wird.

Hierdurch wird die aufgewölbte Membran in umgekehrter Richtung gewölbt und wirkt jetzt als Pumpe, die das in der Pumpenseite der Permeatpumpe gesammelte Wasser - Permeat - über eine entsprechende Leitung in den Druckspeicher führt. Gleichzeitig schließt das in der Leitung von dem RO-Modul zur Pumpenseite der Permeatpumpe eingeschaltete Rückschlagventil.

Um zu vermeiden, daß sich während der Pumpphase ein höherer Staudruck auf der Permeatseite des RO-Moduls aufbaut, kann gemäß einem weiteren Merkmal der Erfindung in die Leitung zwischen dem RO-Modul und der Pumpenseite der Permeatpumpe ein Zwischenspeicher eingebaut sein. Dieser Zwischenspeicher nimmt während der Pumpphase das aus dem RO-Modul ausfließende Permeat auf.

Bei der vorbeschriebenen Ausführungsform wird der Druckspeicher bis zum Leitungsdruck, mit dem das System betrieben wird, gefüllt. Auf der Permeatseite des RO-Moduls entsteht zwar gegen Ende der Befüllung durch den kleinen Druckunterschied zwischen Speicher und Leitungsdruck ein geringfügiger Gegendruck, der aber vernachlässigbar ist. Die Abschaltung des Systems wird dadurch erreicht, daß die Membranpumpe sich in Folge der Druckangleichung auf beiden Seiten nicht mehr bewegt. Hierdurch wird der vorbeschriebene Steuervorgang für die Druckhalteventile unterbrochen.

Ein Nachteil des vorbeschriebenen Systems besteht darin, daß jede aus dem Druckspeicher entnommene Kleinstmenge sofort nachproduziert wird. Da aber die ersten 10 bis 15 Minuten der Arbeitsweise einer Umkehrosmose kein optimales Wasser produzieren, führt die konstante Entnahme von Mengen unter einem halben Liter zu einer langsamen Verschlechterung des Wassers im Speichertank.

Um diesen Nachteil auszuschalten, wird gemäß einem weiteren Merkmal der Erfindung vorgeschlagen, daß in die Rohwasserzulaufleitung zum RO-Modul und in die Leitung zwischen Permeatpumpe und Druckspeicher ein hydraulisch angesteuertes Abschaltventil eingesetzt wird. Dieses hydraulische Abschaltventil sperrt die Wasserzufuhr zum RO-Modul, wenn sich der Speicherdruck auf eine bestimmte Differenz an das Niveau des Leitungsdruckes angenähert hat, beispielsweise auf einen Unterschied von 1, 2 bis 2 bar. Nachdem durch Wasserentnahme der Speicherdruck um etwa 1 bar zurückgegangen ist, wird der Rohwasserzulauf wieder freigegeben.

Ein Ausführungsbeispiel der Erfindung wird nachfolgend anhand des Schaltplanes erläutert.

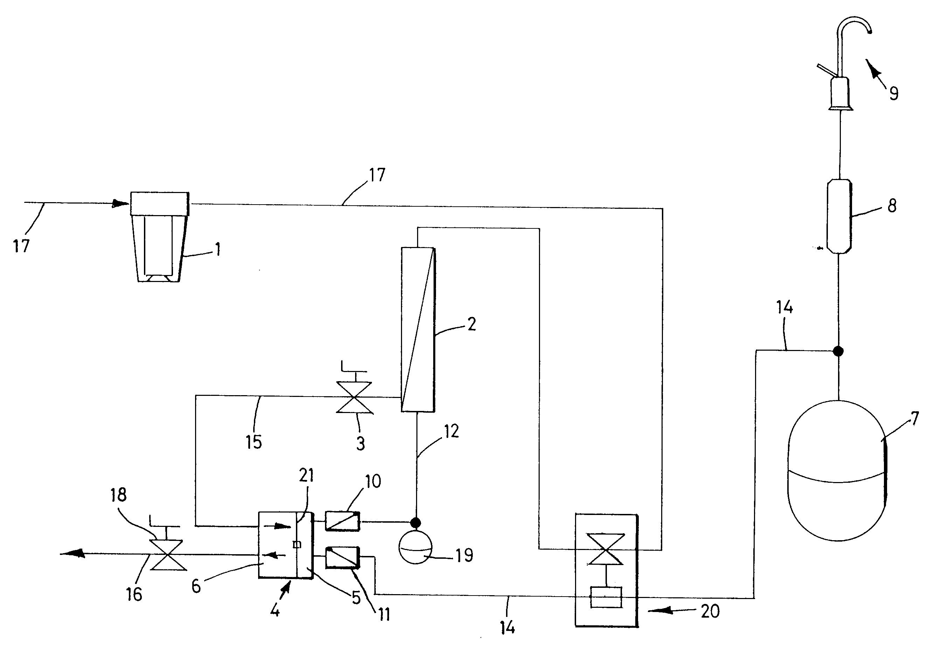

In der Zeichnung ist eine Rohwasserzuleitung 17 dargestellt, in den ein Vorfilter 1 eingeschaltet ist. Diese Rohwasserzuleitung 17, die beispielsweise unter einem Leitungsdruck von 6 bar steht, führt zur Eingangsseite eines Reverse-Osmosemoduls 2.

Dieses RO-Modul 2 ist an der gegenüberliegenden Seite mit einer Auslaufleitung 12 für das Permeat ausgerüstet, die zu einer Permeatpumpe 4 führt. Zwischen dem RO-Modul 2 und der Permeatpumpe 4 ist ein Zwischenspeicher 19 eingeschaltet und außerdem ein Rückschlagventil 10, das in Fließrichtung das RO-Modul 2 zur Permeatpumpe 4 öffnet, wobei dieses Rückschlagventil auch in die Pumpe 4 eingebaut sein kann. Von der Permeatpumpe 4 führt eine Permeatleitung 14 zu einem Druckspeicher 7 und von dort über einen Nachfilter 8 zu einem Auslauf 9.

In diese Permeatleitung 14 ist unmittelbar nach Verlassen der Permeatpumpe 4 oder innerhalb der Permeatpumpe 4 ein nur in Fließrichtung zum Druckspeicher 7 sich öffnendes Rückschlagventil 11 angeordnet.

Die Permeatpumpe 4 weist eine Pumpenseite 5 und eine Arbeitsseite 6 auf, wobei diese beiden Räume durch eine Membrane 21 voneinander getrennt werden. An die Arbeitsseite 6 schließt eine Konzentratzuleitung 15 an, in die bei dem dargestellten Ausführungsbeispiel ein definiert undichtes Druckhalteventil 3 eingeschaltet ist und weiterhin schließt an die Arbeitsseite 6 eine Abflußleitung 16 an, in die ebenfalls ein Druckhalteventil 18 eingeschaltet ist.

Zusätzlich kann in die Rohwasserleitung 17 und in die Permeatleitung 14 ein hydraulisches Abschaltventil 20 oder ein einstellbarer Differenzdruckschalter eingeschaltet sein, so daß bei einem gewissen, wählbaren Differenzdruck zwischen dem Druck in der Rohwasserzulaufleitung 17 und dem Druck im Druckspeicher 7 bzw. der Leitung 14 die Anlage stillgesetzt wird.

Die Arbeitsweise der dargestellten Anlage ist wie folgt:
Das aus dem RO-Modul 2 über die Leitung 12 ausfließende Permeat ist nahezu drucklos und fließt durch das geöffnete Rückschlagventil 10 in die Pumpenseite 5 der Permeatpumpe 4 und wölbt hier mittels des geringen Staudruckes die in der Null-Lage dargestellte Membrane 21 nach links. Sobald die Membrane 21 ihren eingestellten, weitesten Weg erreicht hat, schließt über eine mechanische, elektrische oder hydraulische Vorrichtung das Druckhalteventil 18, das bisher offen war, so daß nunmehr auf der Arbeitsseite 6 der Permeatpumpe 4 ein Arbeitsdruck entstehen kann. Hierdurch wird die Membrane 21 in der Pumpe 4 nach rechts bewegt und das auf der Pumpenseite vorhandene Permeat durch das Rückschlagventil 11 in die Permeatleitung 14 und damit in den Druckspeicher 7 gefördert. Hat die Membrane 21 ihren weitesten Weg nach rechts ausgeführt, schaltet die Schaltvorrichtung wieder um, so daß nunmehr das Druckhalteventil 3 geschlossen und das Druckhalteventil 18 geöffnet wird, so daß nunmehr bei der erneuten Druckbeaufschlagung der Pumpenseite 5 über die Leitung 12 sich die Membrane 21 wieder in die andere Richtung bewegen kann und damit das in der Arbeitsseite 6 befindliche Konzentrat in die Abflußleitung 16 abführt.

Der Zwischenspeicher 19 dient zur Aufnahme des aus dem RO-Modul 2 ausfließenden Permeats bei geschlossenem Ventil 10, so daß das RO-Modul 2 auch während der Pumpphase weiter arbeiten kann und sich auf der Permeatseite des RO-Moduls 2 kein höherer Staudruck aufbauen kann.

## Patentansprüche

1. Trinkwasseraufbereitungsgerät mit einem Reverse-Osmose-Modul (2) (RO-Modul) und einem im Konzentratablauf angeordneten Druckhalteventil (3) sowie einem Druckspeicher (7) als Permeatbehälter, gekennzeichnet durch eine von dem unter Leitungsdruck stehenden Konzentrat angetriebene Permeatpumpe (4) zur intermittierenden Förderung des aus dem RO-Modul (2) austretenden Permeats in den Druckspeicher (7).

2. Trinkwasseraufbereitungsgerät nach Anspruch 1, gekennzeichnet durch eine Membranpumpe als Permeatpumpe (4), an deren Pumpenseite (5) jeweils unter Zwischenschaltung eines Rückschlagventiles (10, 11) eine zum RO-Modul (2) und eine zum Druckspeicher (7) führende Leitung (12, 14) anschließen, während an die Arbeitsseite (6) der Permeatpumpe (4) eine vom RO-Modul (2) kommende Leitung (15) und eine Abflußleitung (16) anschließen, die je ein Druckhalteventil (3, 18) aufweisen.

3. Trinkwasseraufbereitungsgerät nach Anspruch 1 oder 2, gekennzeichnet durch ein hydraulisches Abschaltventil (20), das in die Rohwasserzuleitung (17) und in die Leitung (14) von der Permeatpumpe (4) zum Druckspeicher (7) eingeschaltet ist.

4. Trinkwasseraufbereitungsgerät nach einem der vorhergehenden Ansprüche, gekennzeichnet durch einen Zwischenspeicher (19) zwischen dem RO-Modul (2) und der Permeatpumpe (4).

## Claims

1. A drinking water treatment apparatus comprising a reverse osmosis module (2) (RO module) and a pressure-maintaining valve (3) arranged in the concentrate outlet, as well as a pressure tank (7) as a permeate container, characterized by a permeate pump (4), driven by the concentrate under line pressure, for intermittent conveying into the pressure tank (7) of the permeate exiting from the RO module (2).

2. A drinking water treatment apparatus according to claim 1, characterized by a diaphragm pump acting as the permeate pump (4), to whose pump side (5) there are connected, each with the intermediate connection of a non-return valve (10, 11), lines (12, 14) leading to the RO module (2) and to the pressure tank (7), while to the working side (6) of the permeate pump (4) there are connected a line (15) coming from the RO module (2) and an outlet line (16), which each comprise a pressure maintaining valve (3, 18).

3. A drinking water treatment apparatus according to claim 1 or claim 2, characterized by a hydraulic shut-off valve (20), which is connected to the untreated water feed line (17) and the line (14) from the permeate pump (4) to the pressure tank (7).

4. A drinking water treatment apparatus according to any one of the preceding claims, characterized by a temporary storage tank (19) between the RO module (2) and the permeate pump (4).

## Revendications

1. Appareil de traitement d'eau potable avec un module d'osmose inversée (2) (module OI) et une soupape de maintien de la pression (3) disposée dans l'évacuation du concentré ainsi qu'un accumulateur hydraulique (7) servant de réservoir de perméat, caractérisé en ce qu'il comporte une pompe à perméat (4) entraînée par le concentré sous la pression de la conduite pour le transport intermittent du perméat sortant du module OI (2) dans l'accumulateur hydraulique.

2. Appareil de traitement d'eau potable selon la revendication 1, caractérisé en ce qu'il comporte comme pompe à perméat (4) une pompe à membrane, sur le côté de pompage (5) de laquelle se raccordent, en intercalant une soupape anti-retour (10, 11), des conduites (12, 14) menant l'une au module OI (2) et l'autre à l'accumulateur hydraulique (7), alors qu'une conduite (15) venant du module OI (2) et une conduite d'évacuation (16) présentant chacune une soupape de maintien de la pression (3, 18) se raccordent du côté de travail (6) de la pompe à perméat (4).

3. Appareil de traitement d'eau potable selon la revendication 1 ou 2, caractérisé en ce qu'il comporte une soupape d'arrêt (20) hydraulique, qui est montée dans la conduite d'eau brute (17) et dans la conduite (14) entre la pompe à perméat (4) et l'accumulateur hydraulique (7).

4. Appareil de traitement d'eau potable selon l'une ou l'ensemble des revendications précédentes, caractérisé en ce qu'il comporte un accumulateur intermédiaire (19) entre le module OI (2) et la pompe à perméat (4).
